# EUROPÄISCHE PATENTSCHRIFT

(11) **EP 4 193 817 B1**
(45) Veröffentlichungstag und Bekanntmachung des Hinweises auf die Patenterteilung: **21.08.2024**
(21) Anmeldenummer: 22211755.8
(22) Anmeldetag: 06.12.2022
(51) Int. Cl.: A01B 13/08, A01B 15/02

(54) **SCHWENKTASCHEN MIT UNTERSCHIEDLICHEN ABSTÄNDEN ZUM PFLUGRAHMEN**
SWIVELING POCKETS WITH DIFFERENT DISTANCES TO THE PLOUGH FRAME
POCHES PIVOTANTES AVEC DIFFÉRENTES DISTANCES AU CHÂSSIS DE CHARRUE

(30) Priorität: 07.12.2021 DE 102021132192
(43) Veröffentlichungstag der Anmeldung: 14.06.2023
(73) Patentinhaber: Lemken GmbH & Co KG, 46519 Alpen (DE)
(72) Erfinder: Fröming, Fabian, 01445 Radebeul (DE); Eirmbter, Sebastian, 47877 Willich (DE)

(56) Entgegenhaltungen:
- WO-A1-2012/036619
- WO-A1-2017/027907
- DD-A1- 227 866
- DE-A1- 102010 051 170
- DE-A1- 19 525 555
- US-A1- 2019 249 393

## Beschreibung

Die vorliegende Erfindung betrifft ein Bodenbearbeitungsgerät in Form eines Pfluges zur partiellen Krumenvertiefung.

In der Landwirtschaft werden Pflüge üblicherweise zu einer Wendung und Lockerung des Bodens nach einer vorangegangenen Bearbeitung eingesetzt, wobei dies zeitlich versetzt oder zusammen in Kombination mit anderen Bodenbearbeitungsgeräten erfolgen kann. Der Boden wird dabei im Wesentlichen ganzheitlich gelockert, gemischt und organische Reststoffe nahezu gleichmäßig eingearbeitet. Zur Ertragssteigerung wurden in der Vergangenheit Versuche mit Pflügen unternommen, mit welchen lediglich streifenweise Schächte mit einigem Abstand auf dem Acker angelegt werden konnten, um so eine Verdichtung des Unterbodens durch schwere Landtechnik zu verringern. Diese Schächte durchbrechen vorhandene Verdichtungszonen und ermöglichen so dem Wurzelsystem einen ungehinderten Zugang zu Wasser und den Nährstoffen.

Ein derartiger Pflug zur nachhaltigen Beseitigung von Krumenbasisverdichtungen ist beispielsweise aus der DD 227866 A1 bekannt, wobei schachtbildende Werkzeuge, die mit speziellen Schachtfüllerwerkzeugen ausgerüstet sind, mit Standardpflugkörpern im Wechsel an einem mehrteiligen Rahmen des Pfluges angeordnet werden. Nachteilig ist hierbei, dass bei mehr als zwei Pflugkörpern zur Einstellung unterschiedlicher Schnittbreiten zusätzliche Parallelrahmen an dem Pflugrahmen zur Aufnahme der weiteren Pflugkörper befestigt werden müssen. Durch die Lösung über Parallelrahmen, welche in einem der Zugmaschine abgewandten Bereich des Pfluges angeordnet werden müssen, erhöht sich nicht nur das Gewicht des Pfluges, sondern erfolgt auch eine ungünstige Verschiebung des Schwerpunktes des Gerätes nach hinten, weg von der Zugmaschine. Neben einem aufwändigen Aufbau werden durch die Befestigung eines oder mehrerer Parallelrahmen zudem die Einstellmöglichkeiten des Pfluges vermindert.

Es ist daher die Aufgabe der vorliegenden Erfindung, einen Pflug zur meliorativen Bodenbearbeitung und/oder partiellen Krumenvertiefung bereitzustellen, welcher neben einem geringen Gewicht, ein einfaches Umrüsten, eine vereinfachte Einstellung der Schnittbreite, eine Verbesserung der Bodenfruchtbarkeit und Erträge, sowie einen Beitrag zum Klimaschutz ermöglicht.

Die Aufgabe wird gelöst durch einen Pflug gemäß den Merkmalen des Anspruches 1. Vorteilhafte Ausgestaltungen der Erfindung sind in den Unteransprüchen angegeben.

Ein Pflug, insbesondere ein Drehpflug, zur partiellen Krumenvertiefung weist einen Pflugrahmen und eine Schwenkvorrichtung zum Verschwenken des Pflugrahmens auf, wobei an dem Pflugrahmen in gleichen Abständen, insbesondere mindestens vier, Pflugkörper mittels Halmen an Schwenktaschen verschwenkbar angeordnet sind. Gemäß der Erfindung sind die Pflugkörper an dem Pflugrahmen jeweils im Wechsel als ein schachtbildender erster Pflugkörper und ein herkömmlicher zweiter Pflugkörper ausgestaltet, wobei eine Arbeitsbreite des herkömmlichen zweiten Pflugkörpers größer ist als die eines schachtbildenden ersten Pflugkörpers und eine Arbeitstiefe eines schachtbildenden ersten Pflugkörpers größer ist als die Arbeitstiefe eines herkömmlichen zweiten Pflugkörpers. Durch die Anordnung der ersten und zweiten Pflugkörper an dem Pflugrahmen kann eine aufwändige Montage von Parallelrahmen vermieden werden, wodurch das Gewicht des Pfluges gering gehalten werden kann. Zudem ermöglicht die Schwenkvorrichtung eine einfache Schnittbreitenverstellung des Pfluges. Die wechselnde Anordnung eines tief arbeitenden, schachtbildenden ersten Pflugkörpers und eines herkömmlichen zweiten Pflugkörpers ermöglicht eine gute Bodenwendung, bei der durch den ersten Pflugkörper gebildete Schächte zuverlässig mit Oberboden verfüllen werden. Durch die Form und Anordnung insbesondere der schachtbildenden ersten Pflugkörper wird humusarmen Unterboden nach oben befördert und in den Oberboden eingemischt. Durch diese Einmischung von nährstoffarmem Unterboden in den Oberboden wird die Anreicherung von C und N im Boden neu gestartet. Tiefere Bodenregionen werden für die Pflanzenwurzel erschlossen, wodurch die Bodenfruchtbarkeit und Erträge gesteigert werden können. Zudem schafft die durch die partielle Krumenvertiefung erreichte Krumenverdünnung ein großes CO2-Sequestrierungspotential, wodurch langfristig CO2 im Boden gespeichert und so ein Beitrag zum Klimaschutz geleistet werden kann.

Der Pflug, insbesondere als Drehpflug ausgebildet, kann in Form eines Anbaupfluges oder eines Anhängepfluges ausgestaltet sein. Bei einem Pflug in Form eines Drehpfluges können an einer Schwenktasche jeweils zwei erste Pflugkörper oder zwei zweite Pflugkörper angeordnet sein, wobei die Pflugkörper derart vertikal übereinander angeordnet sein können, dass je Arbeitsrichtung nur einer der Pflugkörper im Bodeneingriff ist. Die Schwenkvorrichtung ist derart ausgebildet, dass der Pflugrahmen zusammen mit den Pflugkörpern zur variablen Schnittbreitenverstellung verschwenkt werden kann. Der Pflug kann dabei parallelrahmenfrei ausgestaltet sein. Schachtbildende erste Pflugkörper können derart beiderseits eines herkömmlichen zweiten Pflugkörpers angebracht sein, daß die ersten Pflugkörper jeweils neben der von dem herkömmlichen zweiten Pflugkörper geräumten Furche mit einer ersten Schnittbreite arbeiten, die kleiner bzw. gleich der zweiten Schnittbreite des herkömmlichen zweiten Pflugkörpers ist. Beispielsweise können die schachtbildenden ersten Pflugkörper im Wesentlichen 25 cm breit und im Wesentlichen 50 cm tief arbeiten, wohingegen die herkömmlichen zweiten Pflugkörper im Wesentlichen 50 cm breit und im Wesentlichen 25 cm tief arbeiten können. Dadurch könnten im Wesentlichen alle 75 cm Schächte unterhalb des Bearbeitungshorizontes erzeugt werden, die mit humosem Oberboden befüllt werden können.

Nach der Erfindung weisen die Schwenktaschen Lagerplatten auf, mit denen die Schwenktaschen, insbesondere lösbar, an dem Pflugrahmen angeordnet sind, wobei erste Lagerplatten des ersten Pflugkörpers eine größere Breite aufweisen als zweite Lagerplatten des zweiten Pflugkörpers. Über die Breite der ersten und zweiten Lagerplatten kann der Abstand der jeweiligen Pflugkörper, insbesondere deren Schwenkpunkte, zum Pflugrahmen eingestellt werden. Dadurch kann eine unterschiedliche Arbeitsbreite der jeweiligen Pflugkörper unter Nutzung der vorhandenen Befestigungspositionen an dem Pflugrahmen berücksichtigt und ein besserer Bodendurchgang ermöglicht werden. Die Nutzung der vorhandenen Befestigungsstellen hat den Vorteil, dass keine schweren Zusatzteile wie Parallelrahmen befestigt werden müssen. Die lösbare Anordnung der Schwenktaschen bzw. der Lagerplatten an dem Pflugrahmen kann beispielsweise mittels einer Bolzenverbindung erfolgen. Dies hat den Vorteil, dass ein einfacher Umbau eines Standardpflug mit herkömmlichen zweiten Pflugkörpern zu einem erfindungsgemäßen Pflug zur partiellen Krumenvertiefung mit ersten und zweiten Pflugkörpern mit geringem Auswand ermöglicht werden kann.

In einer besonders bevorzugten Ausgestaltung der Erfindung ist jedem Pflugkörper eine, insbesondere hydraulische, Überlastsicherung zugeordnet, wobei die Überlastsicherung jeweils zwischen Pflugkörper und Schwenktasche angeordnet ist. Die Überlastsicherung kann eine Überlastung und Beschädigung des Pfluges und der Pflugkörper vermeiden. Durch eine einheitliche Art der Überlastsicherung je Pflugkörper kann ein vereinfachter Umbau, beispielsweise von herkömmlichen zweiten Pflugkörpern auf einen erfindungsgemäßen Pflug mit geringem Aufwand erfolgen. Die Pflugkörper können jeweils mittels eines Halmes an der Überlastsicherung befestigt sein.

In einer weiteren Ausgestaltung der Erfindung ist die hydraulische Überlastsicherung derart ausgestaltet, dass ein erster Auslösedruck für die ersten Pflugkörper und ein zweiter Auslösedruck für die zweiten Pflugkörper einstellbar ist. Dabei kann ein Auslösedruck für, insbesondere alle, erste und, insbesondere alle, zweite Pflugkörper unabhängig voneinander eingestellt werden, beispielsweise mittels Druckbegrenzungsventilen. Ein Auslösedruck für die ersten Pflugkörper kann dabei höher eingestellt werden, als ein Auslösedruck für die zweiten Pflugkörper, die nicht so tief arbeiten wie die ersten Pflugkörper. Alternativ ist denkbar, einen unterschiedlichen Auslösedruck durch Hydraulikzylinder unterschiedlicher Durchmesser bei einheitlichem Druck zu realisieren, wobei den ersten Pflugkörpern Hydraulikzylinder mit größerem Durchmesser, und damit größerer Kolbenfläche, zugeordnet sein können, als den zweiten Pflugkörpern.

In einer besonders bevorzugten Ausgestaltung der Erfindung weist der schachtbildende erste Pflugkörper einen gekröpften Halm auf. Der gekröpfte Halm ermöglicht eine weitere Verschiebung des ersten Pflugköpers nach hinten, weg von dem Pflugrahmen und der Schwenktasche. Dies hat den Vorteil, dass damit die Scharspitze hinter einem Gelenkpunkt der Überlastsicherung angeordnet werden kann, wodurch die zuverlässige Funktion der Überlastsicherung, das Auslösen und Zurückstellen des Pflugkörpers, verbessert werden kann.

In einer weiter besonders bevorzugten Ausgestaltung der Erfindung weist der schachtbildende erste Pflugkörper eine Scharspitze in Form eines Meißelschars auf, welche oberflächenbündig in ein furchenseitig geneigtes Streichblech übergeht, insbesondere landseitig ein Anlagesech, und eine sich zumindest teilweise entlang der Scharspitze und des Streichblechs erstreckende Anlage aufweist. Die Scharspitze kann in Form einer schmal schneidenden, trapezförmigen Meißelschar ausgebildet sein, welche im Wesentlichen waagerecht angeordnet sein kann. Das Meißelschar bzw. der erste Pflugkörper kann einen Schacht erzeugen, der annähernd trapezförmig ist. Der Schacht kann beispielsweise unten im Wesentlichen 10 cm breit und im oberen Bereich im Wesentlichen 25 cm breit sein. Der erste Pflugkörper kann furchenseitig anlagesechfrei oder leitblechfrei ausgestaltet sein. Das Anlagesech kann im Wesentlichen senkrecht angeordnet sein und im Wesentlichen durch lange Anlagen den Schacht länger offenhalten, wodurch eine zuverlässige Verfüllung des Schachtes mit Oberboden ermöglicht werden kann.

In einer weiteren bevorzugten Ausgestaltung der Erfindung weist der schachtbildende erste Pflugkörper mindestens ein, insbesondere landseitig angeordnetes, schachtfüllendes Werkzeug auf. Ein schachtfüllendes Werkzeug kann in Form eines Düngereinlegers oder eines Breitfurchenmessers ausgestaltet sein. Dies ermöglicht ein Lösen des Oberbodens und ein zuverlässiges Befördern des Oberbodens zur Furchenseite und in den Schacht. Ein schachtfüllendes Werkzeug kann variabel einstellbar an dem ersten Pflugkörper angeordnet sein, so dass unterschiedliche Bodengegebenheiten berücksichtigt werden können, um ein zuverlässiges Verfüllen des Schachtes zu gewährleisten.

In einer weiteren bevorzugten Ausgestaltung der Erfindung erstreckt sich die Anlage zumindest bis zu einer Hinterkante des schachtfüllenden Werkzeuges. Die Anlage kann sich dabei mindestens bis zu einer Hinterkante eines am weitesten entgegen der Arbeitsrichtung angeordneten schachtfüllenden Werkzeuges erstrecken. Dies ermöglicht ein hinreichend langes landseitiges Offenhalten des Schachtes, bis dieser zuverlässig mit Oberboden verfüllt ist. Das schachtfüllende Werkzeug kann dabei den Oberboden über die Anlage hinweg in den Schacht befördern.

In einer weiterhin bevorzugten Ausgestaltung weist der Pflug eine Sensorik mit mindestens einem Sensor zur Positionsbestimmung auf. Dies ermöglicht eine ortsspezifische Aufzeichnung von Daten des Pfluges, insbesondere während der Arbeit, wenn der Pflug im Bodeneingriff ist. Hierbei kann eine Kartierung der Schächte in Tiefe und Position erfolgen und beispielsweise als Arbeitsergebnis exakt angezeigt und/oder dokumentiert werden. Durch einen zweiten Positionssensor, beispielsweise ein GPS Sensor, insbesondere mit Korrektursignal, kann die Genauigkeit der Kartierung der Schächte verbessert werden. Hierbei kann in der Sensorik eine genau vermessene Konfiguration des Pfluges hinterlegt sein, um die Genauigkeit der Kartierung weiter zu verbessern

Vorzugsweise weist die Sensorik eine Kommunikationseinheit zum, insbesondere kabellosen, Datentransfer auf. Hierdurch können die ermittelten Daten und/oder die Kartierung der Schächte zur externen Datenverarbeitung und/oder Speicherung weitergeleitet werden.

Weitere Einzelheiten der Erfindung sind der Figur und der Figurenbeschreibung zu entnehmen, die eine bevorzugte Ausführung der Erfindung zeigen.

Es zeigt:

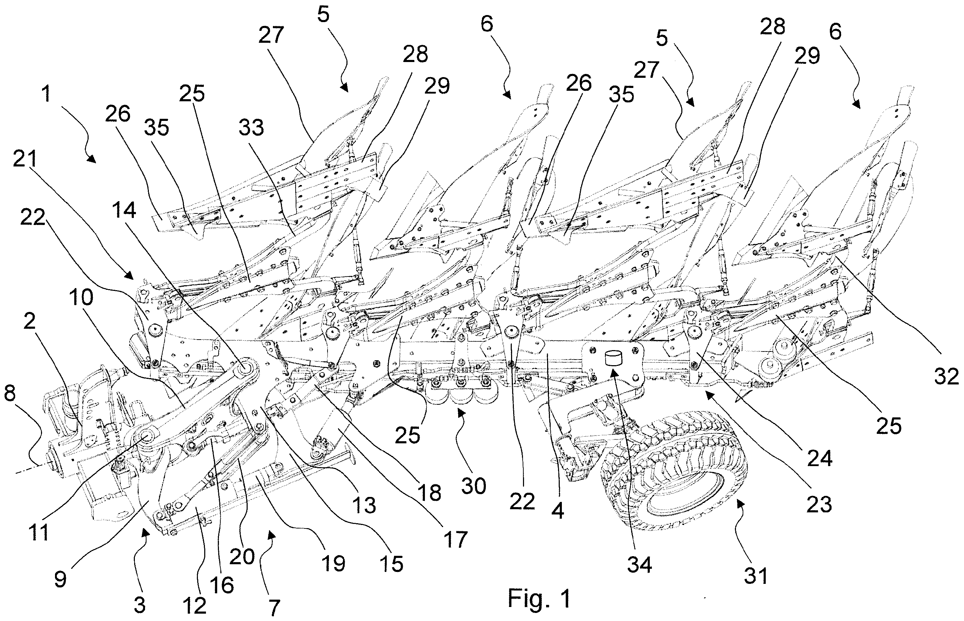

- Fig 1:: einen Anbaudrehpflug zur partiellen Krumenvertiefung in einer perspektivischen Ansicht.

In Figur 1 ist ein Pflug 1 in Form eines Anbaudrehpfluges mit einem Pflugturm 2 für die Verbindung mit einem Dreipunktgestänge eines nicht dargestellten Traktors dargestellt. Der Pflugturm 2, als wesentlicher Bestandteil der Schwenkvorrichtung 3, nimmt einen um Drehachse 8 drehbaren Schwenklager 9 auf, an dem ein Hauptlenker 10 mittels Lenkerbolzen 11 und ein Rahmeneinschwenkzylinder 12 horizontal schwenkbar angeordnet sind. Ein Pflugrahmen 4 des Pfluges 1 weist an seinem pflugturmseitigen Ende Rahmenplatten 13 auf, durch welche der Pflugrahmen 4 mittels eines Lenkerbolzens 14 mit dem Hauptlenker 10 horizontal schwenkbar verbunden ist. Weiterhin weist der Pflug 1 eine Einstellvorrichtung 7 zur Schnittbreitenverstellung des Pfluges 1 auf. In dem gezeigten Ausführungsbeispiel ist die Einstellvorrichtung 7 hydraulisch betätigbar, denkbar ist jedoch ebenso eine mechanische Einstellvorrichtung, welche beispielsweise eine Verstellung in diskreten Schritten ermöglicht. Ein pflugrahmenseitig in dem Lenkerbolzen 14 gelagerter Schwinge 15 ist außenseitig mit dem Rahmeneinschwenkzylinder 12 mittels eines Gelenkbolzen verbunden. Der Hauptlenker 10 und der Rahmeneinschwenkzylinder 12 bilden dabei ein konvergierendes Lenkergetriebe, welches über den Spannschloß 16 in seiner Lage verändert werden kann. An dem Rahmeneinschwenkzylinder 12 ist endseitig ein Hydraulikzylinder 19 angeordnet, welcher mit dem Schwinge 15 verbunden ist. Über den Hydraulikzylinder 19 kann eine Einstellung der Vorderfurchenbreite des Pfluges 1 vorgenommen werden.

Der Spannschloß 16 ist an einem ersten Ende mit einem Bolzen an dem Hauptlenker 10 angeordnet. Mit einem zweiten Ende ist der Spannschloß 16, beabstandet zu dem Lenkerbolzen 14, mit den Rahmenplatten 13 und somit dem Pflugrahmen 4 verbunden. Zwischen Pflugrahmen 4 und dem Schwinge 15 ist ein Schnittbreitenzylinder 17 angeordnet. Über diesen Schnittbreitenzylinder 17, eine Lenkstange 18 und eine pflugrahmenseitigen Steuerstange können die drehbar am Pflugrahmen 4 angeordneten Pflugkörper 5,6 in ihrer Arbeitsbreite verändert werden. Zwischen Schwenklager 9 und den Rahmenplatten 13 ist eine Einschwenkbegrenzung 20 angeordnet, welcher die Schwenkbewegung der Schwenkvorrichtung 7 begrenzt. An dem Pflugrahmen 4 sind in gleichen Abständen vier Pflugkörper 5,6 angeordnet. Die Pflugkörper sind dabei mittels Halmen 32,33 an pflugrahmenseitig befestigten Schwenktaschen 21,23 verschwenkbar angeordnet.

Gemäß der Erfindung sind die Pflugkörper 5,6 an dem Pflugrahmen 4 jeweils im Wechsel als ein schachtbildender erster Pflugkörper 5 und ein herkömmlicher zweiter Pflugkörper 6 ausgestaltet. Eine Arbeitsbreite des herkömmlichen zweiten Pflugkörpers 6 ist dabei größer als die eines schachtbildenden ersten Pflugkörpers 5 und eine Arbeitstiefe eines schachtbildenden ersten Pflugkörpers 5 ist größer als die Arbeitstiefe eines herkömmlichen zweiten Pflugkörpers 6. Die schachtbildenden ersten Pflugkörper 5 sind derart beiderseits eines herkömmlichen zweiten Pflugkörpers 6 angeordnet, daß die ersten Pflugkörper 5 jeweils neben einer von dem herkömmlichen zweiten Pflugkörper 6 geräumten Furche mit einer ersten Schnittbreite arbeiten, die kleiner bzw. gleich der zweiten Schnittbreite des herkömmlichen zweiten Pflugkörpers 6 ist. Die schachtbildenden ersten Pflugkörper 5 können beispielsweise im Wesentlichen 25 cm breit und im Wesentlichen 50 cm tief arbeiten, wohingegen die herkömmlichen zweiten Pflugkörper 6 im Wesentlichen 50 cm breit und im Wesentlichen 25 cm tief arbeiten können. Dadurch könnten im Wesentlichen alle 75 cm Schächte unterhalb des Bearbeitungshorizontes erzeugt werden, die mit humosem Oberboden befüllt werden können.

Die ersten und zweiten Pflugkörper 5,6 sind jeweils mittels Schwenktaschen 21,23 lösbar an dem Pflugrahmen 4 befestigt. Die Schwenktaschen 21,23 weisen Lagerplatten 22,24 zur lösbaren Befestigung der Schwenktaschen 21,23 an dem Pflugrahmen 4 auf. Die Schwenktaschen 21 der ersten Pflugkörper 5 weisen dabei erste Lagerplatten 22 mit einer größeren Breite auf als die zweiten Lagerplatten 24 der zweiten Schwenktaschen 23. Die Breite der Lagerplatten 22,24 bestimmt dabei den Abstand der Schwenkachse eines Pflugkörpers 5,6 von dem Pflugrahmen 4 und damit wie weit eine Pflugkörper 5,6 von dem Pflugrahmen 4 beabstandet ist. Diese Anpassung der Abstände ist aufgrund der unterschiedlichen Arbeitsbreiten der jeweiligen Pflugkörper 5,6 notwendig, damit ein gleichmäßiger Erdfluß um die Körper ermöglicht und Verstopfungen vermieden werden können. Die Befestigung der Pflugkörper 5,6 an den Schwenktaschen 21,23 ermöglicht eine einfache Umrüstung eines herkömmlichen Pfluges in einen erfindungsgemäßen Pflug mit ersten und zweiten Pflugkörpern 5,6.

In dem dargestellten Beispiel sind die ersten und zweiten Pflugkörper 5,6 mit ihren Halmen 32,33 paarweise jeweils an einer hydraulische Überlastsicherung 25 befestigt. Die Überlastsicherung 25 ist derart ausgestaltet, dass ein erster Auslösedruck für die ersten Pflugkörper 5 und ein zweiter Auslösedruck für die zweiten Pflugkörper 6 getrennt einstellbar ist. Die hydraulischen Überlastsicherungen 25 sind dabei mit mehreren hydraulischen Druckspeichern 30 verbunden, welche an dem Pflugrahmen 4 angeordnet sind. Um eine zuverlässige Funktion der Überlastsicherung 25 insbesondere für die ersten Pflugkörper 5 zu gewährleisten, sind diese mittels gekröpfter Halme 33 weiter nach hinten verlagert, so dass eine Scharspitze 26 eines ersten Pflugkörpers 5 über oder hinter einem Gelenkpunkt der Überlastsicherung 25 liegt.

Die schachtbildenden erste Pflugkörper 5 weisen jeweils eine Scharspitze 26 in Form einer Meißelschar auf, welche oberflächenbündig in ein furchenseitig geneigtes Streichblech 27 übergeht. Landseitig weist der erste Pflugkörper 5 zudem eine Anlage 28 auf, welches sich zumindest teilweise entlang der Scharspitze 26 und des Streichblechs 27 erstreckt. Die Scharspitze 26 ist in Form eines schmal schneidenden, trapezförmigen Meißelschars ausgebildet, welches im Wesentlichen waagerecht angeordnet ist, so dass der erste Pflugkörper 5 einen annähernd trapezförmigen Schacht erzeugen kann. Furchenseitig ist der erste Pflugkörper 5 leitblechfrei, das bedeutet, es ist kein Leitblech zum furchenseitigen Offenhalten des Schachtes dargestellt. Zum Verfüllen des Schachtes weist der erste Pflugkörper 5 ein landseitig angeordnetes schachtfüllendes Werkzeug 29 auf. Das schachtfüllende Werkzeug 29 ist dabei in Form eines Düngereinlegers oder eines Breitfurchenmessers ausgestaltet. Das schachtfüllende Werkzeug 29 leitet dabei den gelösten Oberboden über die Anlage 28 hinweg in den Schacht.

An dem Pflugrahmen 4 ist im Bereich des freien, verschwenkbaren Endes ein ebenfalls schwenkbar ausgestaltetes Stützrad 31 angeordnet. Ebenfalls an dem Ende ist eine Sensorik 34 an dem Pflugrahmen 4 angeordnet. Die Sensorik 34 umfasst mindestens einen Positionsbestimmungssensor, beispielsweise einen GPS-Sensor, um eine ortsspezifische Aufzeichnung von Daten des Pfluges, insbesondere während der Arbeit, wenn der Pflug im Bodeneingriff ist, vorzunehmen.

### Bezugszeichen

| | | | |
|---|---|---|---|
| 1 | Pflug | 28 | Anlage |
| 2 | Pflugturm | 29 | Schachtfüllendes Werkzeug |
| 3 | Schwenkvorrichtung | 30 | Druckspeicher |
| 4 | Pflugrahmen | 31 | Schwenkbares Rad |
| 5 | erster Pflugkörper | 32 | Halm |
| 6 | zweiter Pflugkörper | 33 | Gekröpfter Halm |
| 7 | Einstellvorrichtung | 34 | Sensorik |
| 8 | Drehachse | 35 | Anlagesech |
| 9 | Schwenklager | | |
| 10 | Hauptlenker | | |
| 11 | Lenkerbolzen | | |
| 12 | Rahmeneinschwenkzyliner | | |
| 13 | Rahmenplatte | | |
| 14 | Lenkerbolzen | | |
| 15 | Schwinge | | |
| 16 | Spannschloß | | |
| 17 | Schnittbreitenzylinder | | |
| 18 | Lenkstange | | |
| 19 | Hydraulikzylinder | | |
| 20 | Einschwenkbegrenzung | | |
| 21 | Erste Schwenktasche | | |
| 22 | Erste Lagerplatte | | |
| 23 | Zweite Schwenktasche | | |
| 24 | Zweite Lagerplatte | | |
| 25 | Überlastsicherung | | |
| 26 | Scharspitze | | |
| 27 | Streichblech | | |

## Patentansprüche

1. Pflug, insbesondere Drehpflug, zur partiellen Krumenvertiefung mit einem Pflugrahmen(4) und einer Schwenkvorrichtung (3) zum Verschwenken des Pflugrahmens (4), wobei an dem Pflugrahmen (4) in gleichen Abständen, insbesondere mindestens vier, Pflugkörper (5, 6) mittels Halmen (32, 33) an Schwenktaschen (21, 23) verschwenkbar angeordnet sind, wobei die Pflugkörper (5, 6) an dem Pflugrahmen (4) jeweils im Wechsel als ein schachtbildender erster Pflugkörper (5) und ein herkömmlicher zweiter Pflugkörper (6) ausgestaltet sind, wobei eine Arbeitsbreite des herkömmlichen zweiten Pflugkörpers (6) größer ist als die eines schachtbildenden ersten Pflugkörpers (5) und eine Arbeitstiefe eines schachtbildenden ersten Pflugkörpers (5) größer ist als die Arbeitstiefe eines herkömmlichen zweiten Pflugkörpers (6), **dadurch gekennzeichnet, dass** die Schwenktaschen (21, 23) Lagerplatten (22, 24) aufweisen, mit denen die Schwenktaschen (21, 23), insbesondere lösbar, an dem Pflugrahmen (4) angeordnet sind, wobei erste Lagerplatten (22) des ersten Pflugkörpers (5) eine größere Breite aufweisen als zweite Lagerplatten (24) des zweiten Pflugkörpers (6).

2. Pflug nach Anspruch 1, **dadurch gekennzeichnet, dass** jedem Pflugkörper (5, 6) eine, insbesondere hydraulische, Überlastsicherung (25) zugeordnet ist, wobei die Überlastsicherung (25) jeweils zwischen Pflugkörper (5, 6) und Schwenktasche (21, 23) angeordnet ist.

3. Pflug nach Anspruch 1 oder 2, **dadurch gekennzeichnet, dass** die hydraulische Überlastsicherung (25) derart ausgestaltet ist, dass ein erster Auslösedruck für die ersten Pflugkörper (5) und ein zweiter Auslösedruck für die zweiten Pflugkörper (6) einstellbar ist.

4. Pflug nach einem der vorhergehenden Ansprüche, **dadurch gekennzeichnet, dass** der schachtbildende erste Pflugkörper (5) einen gekröpften Halm (33) aufweist.

5. Pflug nach einem der vorhergehenden Ansprüche, **dadurch gekennzeichnet, dass** der schachtbildende erste Pflugkörper (5) eine Scharspitze (26) in Form eines Meißelschars aufweist, welche oberflächenbündig in ein furchenseitig geneigtes Streichblech (27) übergeht, insbesondere landseitig ein Anlagesech (35), und eine sich zumindest teilweise entlang der Scharspitze (26) und des Streichblechs (27) erstreckende Anlage (28) aufweist.

6. Pflug nach einem der vorhergehenden Ansprüche, **dadurch gekennzeichnet, dass** der schachtbildende erste Pflugkörper (5) mindestens ein, insbesondere landseitig angeordnetes, schachtfüllendes Werkzeug (29) aufweist.

7. Pflug nach Ansprüche 5 und 6, **dadurch gekennzeichnet, dass** die Anlage (28) sich zumindest bis zu einer Hinterkante des schachtfüllenden Werkzeuges (29) erstreckt.

8. Pflug nach einem der vorhergehenden Ansprüche, **dadurch gekennzeichnet, dass** der Pflug (1) eine Sensorik (34) mit mindestens einem Sensor zur Positionsbestimmung aufweist.

9. Pflug nach Anspruch 8, **dadurch gekennzeichnet, dass** die Sensorik (34) eine Kommunikationseinheit zum Datentransfer aufweist.

## Claims

1. A plough, in particular reversible plough, for the partial topsoil deepening having a plough frame (4) and a pivoting device (3) for pivoting the plough frame (4), wherein on the plough frame (4) at same distances, in particular at least four plough bodies (5, 6) are pivotably arranged on swing pockets (21, 23) by means of stalks (32, 33), wherein the plough bodies (5, 6) on the plough frame (4) are each configured as a shaft-forming first plough body (5) and a conventional second plough body (6), wherein a working width of the conventional second plough body (6) is greater than that of a shaft-forming first plough body (5), and a working depth of a shaft-forming first plough body (5) is greater than the working depth of a conventional second plough body (6), **characterised in that** the swing pockets (21, 23) comprise bearing plates (22, 24), with which the swing pockets (21, 23) are, in particular releasably, arranged on the plough frame (4),
wherein first bearing plates (22) of the first plough body (5) have a greater width than second bearing plates (24) of the second plough body (6).

2. The plough according to Claim 1, **characterised in that** each plough body (5, 6) is assigned a, in particular hydraulic, overload protection (25), wherein each overload protection (25) is arranged between plough body (5, 6) and swing pocket (21, 23).

3. The plough according to Claim 1 or 2, **characterised in that** the hydraulic overload protection (25) is configured in such a manner that a first release pressure for the first plough bodies (5) and a second release pressure for the second plough bodies (6) are adjustable.

4. The plough according to any one of the preceding claims, **characterised in that** the shaft-forming first plough body (5) comprise an offset stalk (33).

5. The plough according to any one of the preceding claims, **characterised in that** the shaft-forming first plough body (5) comprises a share tip (26) in the form of a chisel share, which, flush with the surface, merges into a mouldboard (27) inclined on the furrow side, in particular comprises on the land side a landside knife coulter (35) and a landside (28) extending at least partially along the share tip (26) and the mouldboard (27).

6. The plough according to any one of the preceding claims, **characterised in that** the shaft-forming first plough body (5) comprises at least one shaft-filling tool (29) arranged in particular on the land side.

7. The plough according to Claims 5 and 6, **characterised in that** the landside (28) extends at least as far as to a rear edge of the shaft-filling tool (29).

8. The plough according to any one of the preceding claims, **characterised in that** the plough (1) comprises a sensor system (34) with at least one sensor for positioning.

9. The plough according to Claim 8, **characterised in that** the sensor system (34) comprises a communications unit for the data transfer.

## Revendications

1. Charrue, notamment charrue réversible, destinée à l'approfondissement partiel des terres arables, pourvue d'un bâti (4) de charrue et d'un dispositif de pivotement (3) pour faire pivoter le bâti (4) de charrue, sur le bâti (4) de charrue, à écarts égaux, notamment au moins quatre corps (5, 6) de charrue étant placés de manière pivotante au moyen de tiges (32, 33) sur des platines pivotantes (21, 23), les corps (5, 6) de charrue étant conçus sur le bâti (4) de charrue chaque fois alternativement sous la forme d'un premier corps (5) de charrue formant des puits et d'un deuxième corps (6) de charrue conventionnel, une largeur de travail du deuxième corps (6) de charrue conventionnel étant supérieure à celle du premier corps (5) de charrue formant des puits et une profondeur de travail d'un premier corps (5) de charrue formant des puits étant supérieure à la profondeur de travail d'un deuxième corps (6) de charrue conventionnel, **caractérisée en ce que** les platines pivotantes (21, 23) comportent des plaques d'appui (22, 24), à l'aide desquelles les platines pivotantes (21, 23) sont placées, notamment de manière amovible sur le bâti (4) de charrue, des premières plaques d'appui (22) du premier corps (5) de charrue présentant une largeur supérieure à celle de deuxièmes plaques d'appui (24) du deuxième corps (6) de charrue.

2. Charrue selon la revendication 1, **caractérisée en ce qu'**à chaque corps (5, 6) de charrue est associée une protection anti-surcharge (25), notamment hydraulique, la protection anti-surcharge (25) étant placée chaque fois entre le corps (5, 6) de charrue et la platine pivotante (21, 23).

3. Charrue selon la revendication 1 ou 2, **caractérisée en ce que** la protection anti-surcharge (25) hydraulique est conçue de telle sorte qu'une première pression de déclenchement pour le premier corps (5) de charrue et une deuxième pression de déclenchement pour le deuxième corps (6) de charrue soit réglable.

4. Charrue selon l'une quelconque des revendications précédentes, **caractérisée en ce que** le premier corps (5) de charrue formant des puits comporte une tige (33) coudée.

5. Charrue selon l'une quelconque des revendications précédentes, **caractérisée en ce que** le premier corps (5) de charrue formant des puits comporte une pointe de soc (26) ayant la forme d'un soc à tranchant, lequel passe à fleur de surface dans un versoir (27) incliné vers le côté du sillon, comporte notamment côté terrain un coutre (35) et un appui (28) s'étendant au moins en partie le long de la pointe de soc (26) et du versoir (27).

6. Charrue selon l'une quelconque des revendications précédentes, **caractérisée en ce que** le premier corps (5) de charrue formant des puits comporte au moins un outil (29) de comblement des puits, placé notamment du côté du terrain.

7. Charrue selon les revendications 5 et 6, **caractérisée en ce que** l'appui (28) s'étend au moins jusqu'à une arête arrière de l'outil (29) de comblement des puits.

8. Charrue selon l'une quelconque des revendications précédentes, **caractérisée en ce que** la charrue (1) comporte un système capteur (34) pourvu d'au moins un capteur, pour déterminer la position.

9. Charrue selon la revendication 8, **caractérisée en ce que** le système capteur (34) comporte une unité de communication pour le transfert de données.
